# EUROPEAN PATENT SPECIFICATION

(11) **EP 4 526 146 B1**
(45) Date of publication and mention of the grant of the patent: **15.04.2026**
(21) Application number: 23725834.8
(22) Date of filing: 03.05.2023
(51) Int. Cl.: B60K 37/20, B60H 1/34, B60H 1/00, F16B 5/06

(54) **MOTOR-VEHICLE DASHBOARD, CENTRAL VENT UNIT, AND CORRESPONDING FASTENING SEAT**
ARMATURENBRETT FÜR KRAFTFAHRZEUGE, ZENTRALE ENTLÜFTUNGSEINHEIT UND ENTSPRECHENDER BEFESTIGUNGSSITZ
TABLEAU DE BORD DE VÉHICULE À MOTEUR, UNITÉ D'ÉVENT CENTRALE ET SIÈGE DE FIXATION CORRESPONDANT

(30) Priority: 18.05.2022 IT 202200010313
(43) Date of publication of application: 26.03.2025
(73) Proprietor: Stellantis Europe S.p.A., 10135 Torino (TO) (IT)
(72) Inventor: BATTISTA, Francesco, 10135 Torino (IT); L'ALTRELLA, Martino, 10135 Torino (IT); LUCCHESI, Marco, 10135 Torino (IT)
(74) Representative: Buzzi, Notaro & Antonielli d'Oulx S.p.A.
(86) International application number: PCT/IB2023/054600
(87) International publication number: WO 2023/223133

(56) References cited:
- JP-A- 2001 140 820
- JP-A- 2015 058 735
- JP-A- H0 825 955
- US-A1- 2017 043 648

## Description

### Field of the invention

The present invention relates in general to the field of motor-vehicle interiors and more in particular regards a solution for installing a central vent unit of a motor-vehicle dashboard.

### Prior art

As is known, motor-vehicle interiors have a dashboard provided for arranging various components/instruments, such as finishing panels, pushbutton panels, regulating sliders, the instrument cluster, the radio/satellite-navigator system, etc. The dashboard is moreover provided with various air vents connected to a heating and air-conditioning system of the motor vehicle. The air vents comprise a channel for emission of a flow of air and means for controlling the direction of outflow.

Typically, the air vents are engaged to fastening inserts embedded within the structure of the dashboard, which comprises a supporting body generally made of plastic material, and possibly a coating layer. The documents KR 101735428 B1, US 2017/043648 A1, JP 2015 058735 A, JP H08 25955 A and JP 2001 40820 A describe solutions for providing a central vent unit in a central portion of the dashboard.

The present invention stems from the desire to propose a motor-vehicle dashboard and a corresponding solution for installing a central vent unit, which will be particularly effective, exploiting the installation spaces present on the dashboard, in particular in the case of use of air vents of the same type and of the same dimensions on different motor-vehicle models that define different overall dimensions and spaces of installation.

### Object of the invention

The object of the present invention is to provide, inside the passenger compartment of a motor vehicle, a dashboard that presents constructional features that will be particularly effective, enabling installation of vent units of the same type on dashboards with different overall dimensions and spaces of installation.

A further object of the invention is to obtain the above solution with means that are relatively simple to implement and involve low costs.

A further object of the invention is to obtain the above solution with means that will guarantee effective engagement of the central vent unit, guaranteeing its duration and reliability over time.

### Summary of the invention

The above objects are achieved by a dashboard assembly for a motor vehicle, comprising:
- a main dashboard body defining a passenger-side portion, a central portion, and a driver-side portion;
- a shaped reinforcement body associated to said main dashboard body; and
- a central vent unit configured for directing a flow of air towards the inside of the motor vehicle, wherein said central vent unit comprises two air vents arranged side by side, as well as respective supporting and flow-guide bodies,
- wherein said shaped reinforcement body comprises a fastening seat obtained in said central portion and configured for receiving and fastening said central vent unit,
- wherein said fastening seat comprises two adjacent frames provided for selectively receiving said supporting and flow-guide bodies, and
- wherein each frame comprises a bottom frame side defined by a thinned-out strip, provided on which are fastening portions mutually engaged with respective snap-action means of the respective air vent, said bottom side having an elastic behaviour when the central vent unit is mounted within the fastening frame.

Further advantageous characteristics of the invention are defined in the dependent claims and in the ensuing description.

### Brief description of the drawings

Further characteristics and advantages of the invention will emerge from the ensuing description with reference to the annexed drawings, which are provided purely by way of non-limiting example and in which:
- Figure 1 is a perspective view of a motor-vehicle dashboard, including a central vent unit, according to a preferred embodiment;
- Figure 2 is a perspective view of the central vent unit illustrated in Figure 1;
- Figure 3 is a perspective view of a shaped reinforcement body for fastening the central vent unit, according to an embodiment of the invention;
- Figure 4 is a perspective view at an enlarged scale that illustrates some components of the previous figures;
- Figure 5A is a cross-sectional view according to the line V-V appearing in Figure 4, which illustrates the dashboard in an assembled configuration;
- Figure 5B is a perspective view at an enlarged scale of some components of Figure 5A;
- Figure 6A is a cross-sectional view according to the line VI-VI appearing in the Figure 5B, which illustrates the dashboard in an assembled configuration;
- Figure 6B is a perspective view at an enlarged scale that illustrates some components of Figure 6A;
- Figure 7 is a further perspective view of the shaped reinforcement body illustrated in Figure 3; and
- Figures 8A and 8B are perspective views at an enlarged scale, which illustrate some details of Figure 7.

### Detailed description of a number of embodiments

In the ensuing description, various specific details are illustrated aimed at enabling an in-depth understanding of examples of one or more embodiments. The embodiments may be obtained without one or more of the specific details, or with other methods, components, materials, etc. In other cases, known structures, materials, or operations are not shown or described in detail so that various aspects of the embodiments will not be obscured. Reference to "an embodiment" or "one embodiment" in the framework of the present description is intended to indicate that a particular configuration, structure, or characteristic described in relation to the embodiment is comprised in at least one embodiment. Hence, phrases such as "in an embodiment" or "in one embodiment" that may be present in various points in this description do not necessarily refer to one and the same embodiment. Moreover, particular conformations, structures, or characteristics may be combined in any adequate way in one or more embodiments and/or associated to the embodiments in a way different from what has been illustrated herein so that, for example, a characteristic exemplified herein in relation to one figure may be applied to one or more embodiments exemplified in a different figure.

The references used herein are provided only for convenience and hence do not limit the sphere of protection or the scope of the embodiments.

Designated as a whole by the reference 1 is a dashboard assembly of a motor-vehicle interior. The dashboard assembly 1 is mounted, in use, on a purposely provided supporting structure (not illustrated) carried by a portion of chassis of the motor vehicle (not illustrated). The dashboard assembly 1 extends throughout the width of the passenger compartment of the motor vehicle and is designed to perform various functions, amongst which to make available for use the instrument cluster, various pushbutton panels, regulating sliders, the radio/satellite-navigator system, etc.

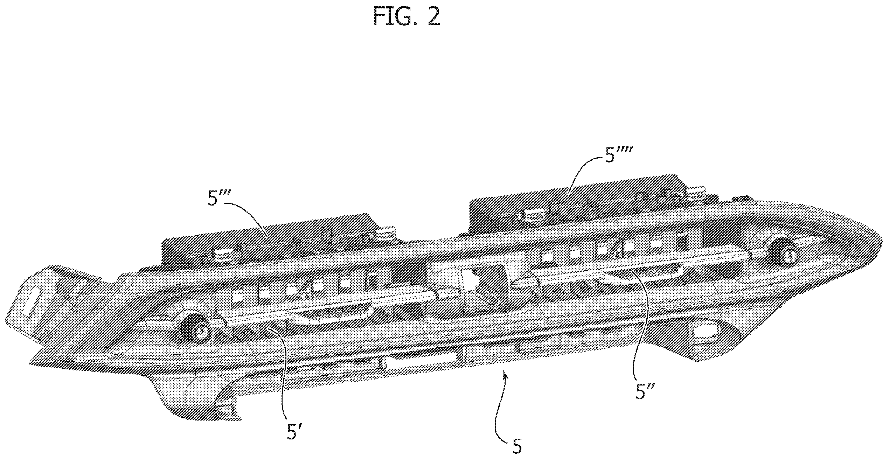

In the annexed drawings, designated by the reference number 2 is a main dashboard body, which defines a passenger-side portion, a central portion, and a driver-side portion. Designated as a whole by the reference number 5 is a central vent unit provided for directing a flow of air towards the inside of the motor vehicle, in particular towards the passengers. Figure 2 is a perspective view of a preferred embodiment of the unit 5. The central vent unit 5 comprises a pair of vents 5', 5" arranged side by side and means for regulating autonomously the direction of outflow. Each vent 5', 5" comprises respective supporting and flow-guide bodies 5‴, 5ʺʺ provided for channelling the flow of air towards the outlet of the vents 5', 5". In the embodiment illustrated in the drawings, the supporting and flow-guide bodies 5‴, 5ʺʺ are substantially parallelepipedal in shape.

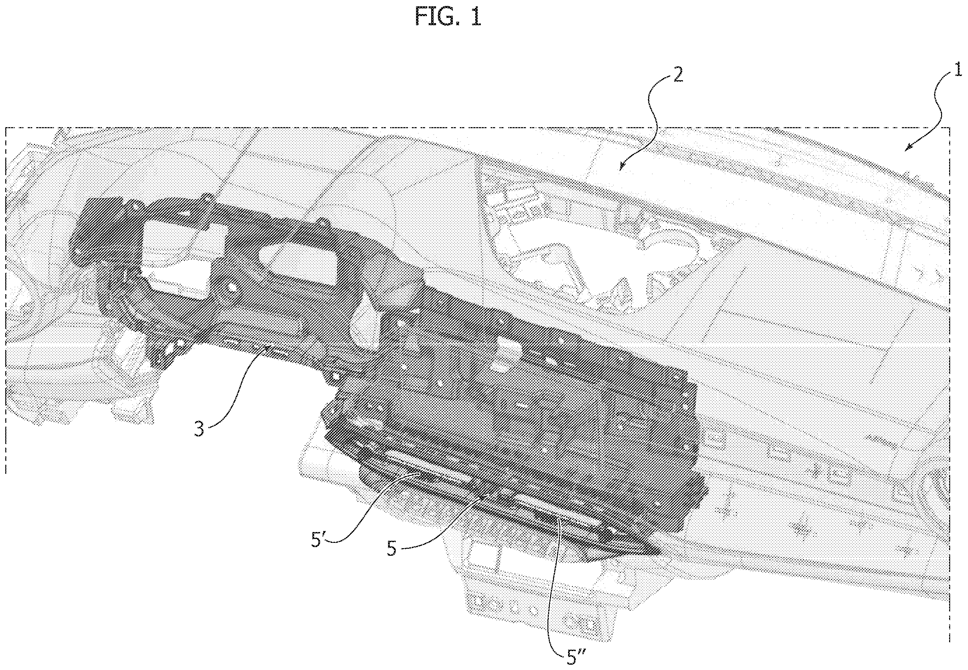

As illustrated in Figures 1, 3, 4, and 7, the dashboard assembly 1 basically comprises a shaped reinforcement body 3 associated to the main body 2 and extending mainly along said central portion and said driver-side portion of the dashboard 1. The reinforcement body 3 is not visible from outside the dashboard assembly 1 in the final assembled condition, given that it is mounted internally with respect to the front outer surface of the dashboard assembly 1 (applied, for example, on which is a decorative coating layer). The shaped reinforcement body 3, generally made of plastic material, is equipped with purposely provided fastening areas designed to enable proper positioning and fastening of various components integrated in the dashboard 1. The shaped reinforcement body 3 may be made of a single piece or else of a number of parts appropriately coupled together. Illustrated in the annexed drawings is an example of shaped reinforcement body 3 comprising a driver-side portion and a central portion made of a single piece of polycarbonate, for example polycarbonate/acrylonitrile-butadiene-styrene ("PC + ABS").

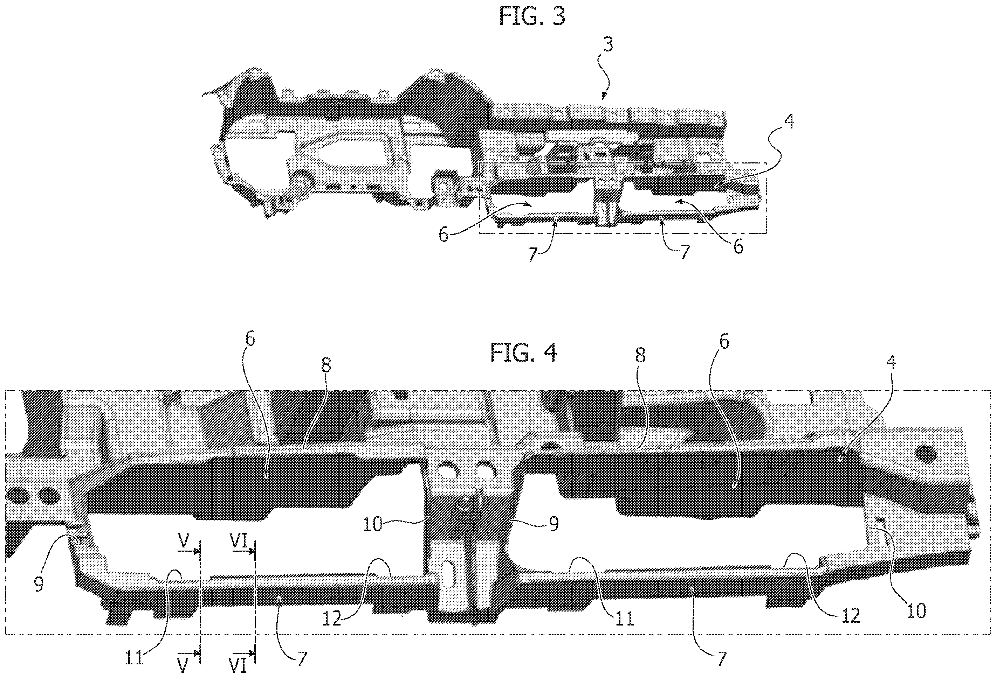

According to the invention, the shaped reinforcement body 3 is provided with a fastening seat 4 configured for receiving and fastening the central vent unit 5. As illustrated in the view at an enlarged scale of Figure 4, the fastening seat 4 comprises two frames 6 arranged side by side provided for selectively receiving the supporting and flow-guide bodies 5"', 5'''' of the vents 5', 5". The fastening framed 6 are obtained in a bottom area of the central portion of the shaped reinforcement body 3 with reference to the final assembled condition.

Each fastening frame 6 comprises a seat substantially having a rectangular shape defining a bottom side 7, a top side 8, and lateral frame portions 9, 10. The seat is sized for receiving the supporting and flow-guide bodies 5‴, 5ʺʺ of the vents 5', 5"; for this reason the bottom side 7 and the top side 8 have a greater length than the lateral frame portions 9, 10. Each bottom side 7 is defined by a thinned-out strip, provided in which are fastening portions 11, 12 mutually engaged with respective snap-action means 13 integrated in the respective air vent 5', 5". In the embodiment illustrated in the drawings, each fastening frame 6 comprises a pair of fastening portions 11, 12. In other words, each strip comprises two fastening portions 11, 12 spaced apart substantially at the ends of the strip.

According to a characteristic of the invention, the dimensions of each bottom frame side 7 differ along the extension of the strip.

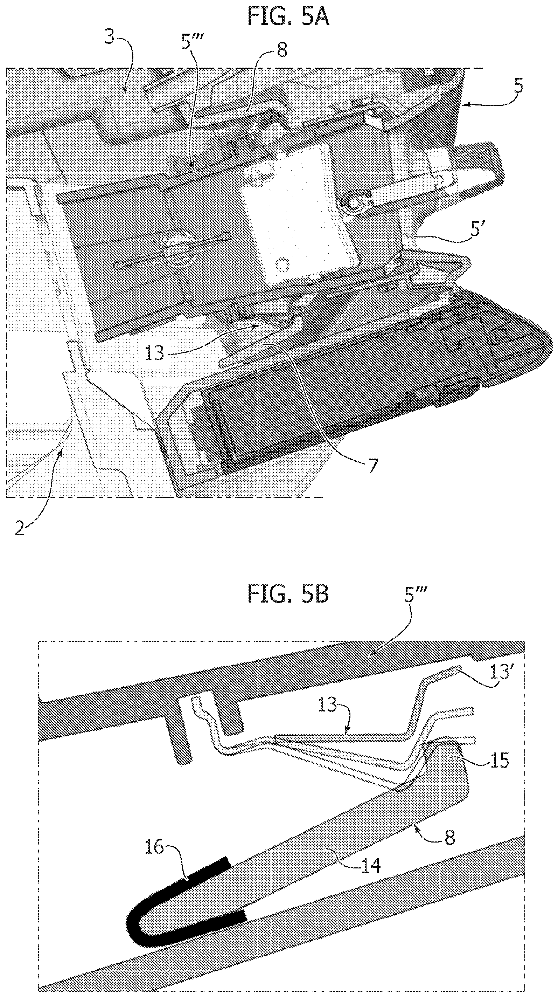

Figure 5A is a cross-sectional view of the strip, according to the line V-V indicated in the previous figures, taken in a region corresponding to a fastening portion 11. As illustrated in the view at an enlarged scale of Figure 5B, it should be noted that the strip has a substantially L-shaped body defining a main side 14 extending towards the inside of the dashboard 1 in a horizontal direction substantially parallel to the supporting and flow-guide body 5‴, 5ʺʺ and a second side 15 extending in a vertical direction with reference to the final assembled condition of installation on the motor vehicle. As illustrated in Figure 5B, the snap-action means 13 of the vent unit 5 comprise an elastically compliant body with a tooth-like portion 13' engaged with the second side 15 of the strip. It should be noted that the snap-action means 13 may be provided also at the top for mutual engagement with the top frame side 8. Designated by the reference 16 is an element made of felt that surrounds the terminal portion of the main side 14 of the strip to prevent direct contact with the supporting and flow-guide body 5‴. According to a preferred embodiment, in the area of the fastening portion 11 described above, the strip has the following dimensions: 25 mm for the main side 14; 7 mm for the second side 15; and 2.8 mm for the thickness defining the main side 14.

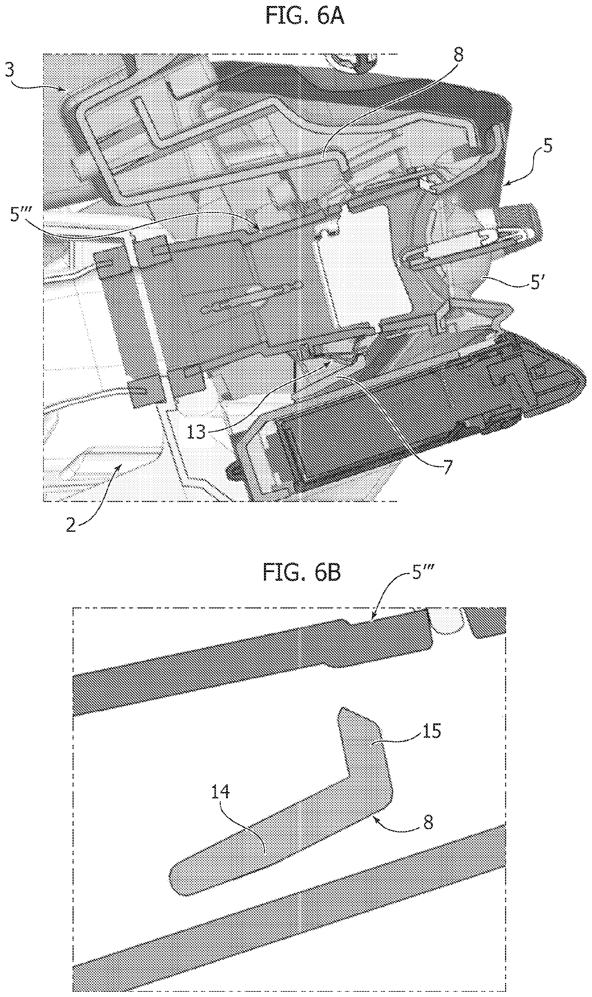

Figure 6A is a cross-sectional view of the strip obtained in a central portion of the bottom side 7 of the frame 6, in which the snap-action means 13 of the vent unit 5 are not engaged. As illustrated in the view at an enlarged scale of Figure 6B, it should be noted that the strip also has in this area a substantially L-shaped body defining a main side 14 extending towards the inside of the dashboard 1 in a horizontal direction substantially parallel to the supporting and flow-guide body 5‴, 5ʺʺ and a second side 15 extending in a vertical direction with reference to the final assembled condition of installation on the motor vehicle. It should be noted that, in the above central area (hence excluding the fastening portions 11, 12), the strip is not in contact with the walls that define the supporting and flow-guide body 5‴, 5ʺʺ of the vents 5', 5". According to a preferred embodiment, in the central area described above, the strip has the following dimensions: 15.5 mm for the main side 14; 9.4 mm for the second side 15; and 2.8 mm for the thickness defining the main side 14. As regards the dimensions of the strip, more in general the aforesaid second side 15 has a smaller extension in the area of the fastening portions 11, 12, than does a central area in which coupling with the snap-action means 13 is not envisaged.

In the light of the characteristics described above, the strip defining the bottom frame side 7 has an elastic behaviour when the central vent unit 5 is mounted within the fastening frames 6, with the bottom side 7 that bends so as to enable a simple and effective connection of the central vent unit 5.

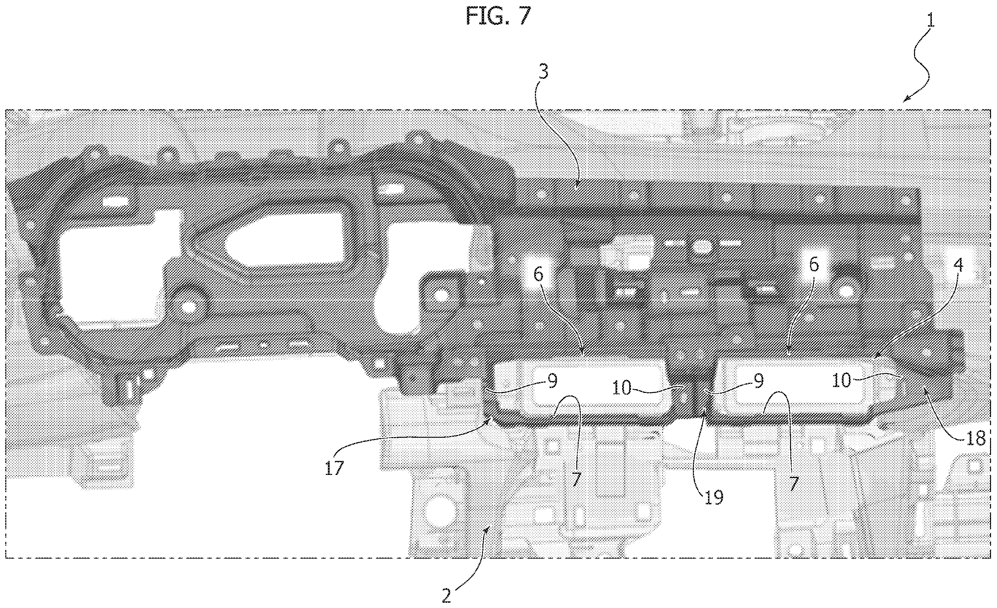

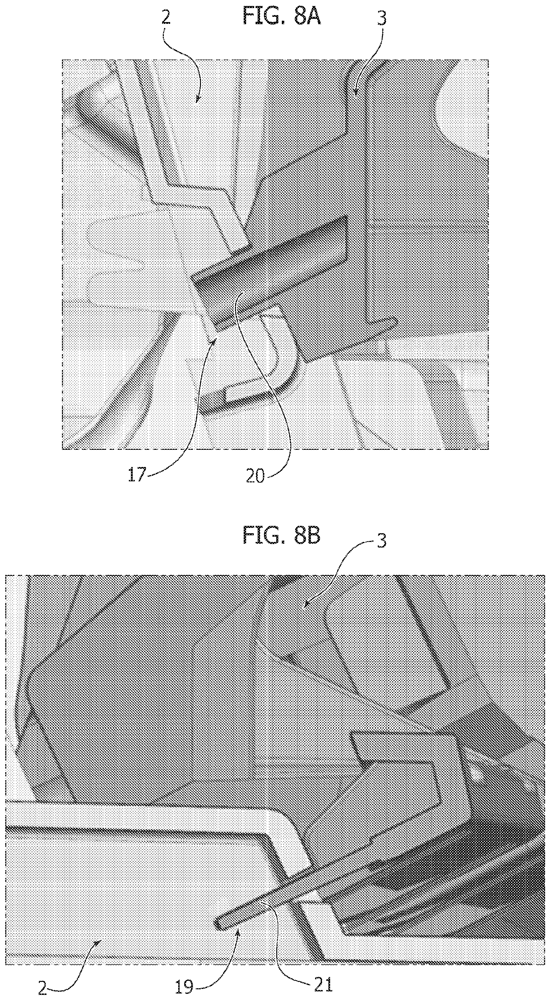

According to a further characteristic of the invention illustrated in Figures 7 and 8, in the proximity of the fastening seat 4, the shaped reinforcement body 3 comprises a plurality of portions constrained to the main dashboard body 2. More in particular, three welded areas 17, 18, 19 are present, in particular two welded end areas 17, 18 at opposite ends of the fastening seat 4 and a welded central area 19 between the two fastening frames 6. In a position corresponding to each welded area 17, 18, 19, the main dashboard body 2 comprises a hollow portion sized for receiving respective projecting elements 20, 21 of the shaped reinforcement body 3 (for example, integrated in a single piece with the reinforcement body 3). The projecting elements 20, 21 are welded to the main dashboard body 2 in a position corresponding to the aforesaid hollow portions.

Of course, without prejudice to the underlying principle of the invention, the details of construction and the embodiments may vary widely with respect to what has been described and illustrated herein purely to way of example, without thereby departing from the scope of the present invention as defined by the annexed claims.

## Claims

1. A dashboard assembly (1) for a motor vehicle, comprising:
- a main dashboard body (2) defining a passenger-side portion, a central portion, and a driver-side portion;
- a shaped reinforcement body (3) associated to said main dashboard body (2); and
- a central vent unit (5) configured for directing a flow of air towards the inside of the motor vehicle, wherein said central vent unit (5) comprises two air vents (5', 5") arranged side by side and respective supporting and flow-guide bodies (5‴, 5ʺʺ),
- wherein said shaped reinforcement body (3) comprises a fastening seat (4) obtained in said central portion and configured for receiving and fastening said central vent unit (5),
- wherein said fastening seat (4) comprises two adjacent frames (6) provided for selectively receiving said supporting and flow-guide bodies (5‴, 5ʺʺ), and
- wherein each frame (6) comprises a bottom frame side (7) defined by a thinned-out strip, provided on which are fastening portions (11, 12) mutually engaged with respective snap-action means (13) of the respective air vent (5', 5"), said bottom side (7) having an elastic behaviour when the central vent unit (5) is mounted within the fastening frames (6).

2. The dashboard assembly (1) according to claim 1, wherein said fastening frames (6) are obtained in a bottom area of a central portion of the shaped reinforcement body (3) with reference to the final assembled condition.

3. The dashboard assembly (1) according to any one of the preceding claims, wherein said shaped reinforcement body (3) is made of a single piece of polycarbonate, for example polycarbonate/acrylonitrile-butadiene-styrene ("PC + ABS").

4. The dashboard assembly (1) according to any one of the preceding claims, wherein each fastening frame (6) has a substantially rectangular shape defining said bottom side (7), a top side (8), and lateral frame portions (9, 10).

5. The dashboard assembly (1) according to any one of the preceding claims, wherein each strip comprises two fastening portions (11, 12) spaced apart substantially at the ends of the strip.

6. The dashboard assembly (1) according to any one of the preceding claims, wherein the strip has a substantially L-shaped body defining a main side (14) extending towards the inside of the dashboard (1) in a horizontal direction substantially parallel to the supporting and flow-guide body (5‴, 5ʺʺ) and a second side (15) extending in a vertical direction with reference to the final assembled condition.

7. The dashboard assembly (1) according to claim 6, wherein the dimensions of each bottom side (7) differ along the extension of the strip, wherein said second side (15) in the area of the fastening portions (11, 12) has a smaller extension than does a central area of the strip where coupling with the snap-action means (13) is not envisaged.

8. The dashboard assembly (1) according to claim 6 or claim 7, wherein the snap-action means (13) of the vent unit (5) comprise an elastically compliant body with a tooth-like portion (13') engaged to the second side (15) of the strip.

9. The dashboard assembly (1) according to claim 7, wherein in said central area, the strip is not in contact with the supporting and flow-guide body (5‴, 5ʺʺ).

10. The dashboard assembly (1) according to any one of the preceding claims, comprising a plurality of welded areas (17, 18, 19) for constraining the shaped reinforcement body (3) to the main body (2), where, in each welded area (17, 18, 19), the main body (2) comprises a hollow portion sized for receiving respective projecting elements (20, 21) of the shaped reinforcement body (3).

## Patentansprüche

1. Armaturentafelanordnung (1) für ein Kraftfahrzeug, umfassend:
- einen Hauptkörper der Armaturentafel (2), der einen beifahrerseitigen Bereich, einen mittleren Bereich und einen fahrerseitigen Bereich definiert;
- einen geformten Verstärkungskörper (3), der dem genannten Hauptkörper der Armaturentafel (2) zugeordnet ist; und
- eine zentrale Lüftungseinheit (5), die zum Lenken eines Luftstroms in den Innenraum des Kraftfahrzeugs ausgebildet ist, wobei die genannte zentrale Lüftungseinheit (5) zwei nebeneinander angeordnete Luftauslässe (5', 5") sowie jeweilige Träger- und Strömungsleitkörper (5‴, 5ʺʺ) umfasst,
- wobei der genannte geformte Verstärkungskörper (3) einen im genannten mittleren Bereich ausgebildeten Befestigungssitz (4) umfasst, der zum Aufnehmen und Befestigen der genannten zentralen Lüftungseinheit (5) ausgebildet ist,
- wobei der genannte Befestigungssitz (4) zwei benachbarte Rahmen (6) umfasst, die zum selektiven Aufnehmen der genannten Träger- und Strömungsleitkörper (5"', 5"") vorgesehen sind, und
- wobei jeder Rahmen (6) eine untere Rahmenseite (7) umfasst, die durch einen ausgedünnten Streifen gebildet ist, an dem Befestigungsabschnitte (11, 12) vorgesehen sind, die mit jeweiligen Schnappmitteln (13) des jeweiligen Luftauslasses (5', 5") in gegenseitigem Eingriff stehen, wobei die genannte untere Seite (7) ein elastisches Verhalten aufweist, wenn die zentrale Lüftungseinheit (5) innerhalb der Befestigungsrahmen (6) montiert ist.

2. Armaturentafelanordnung (1) nach Anspruch 1, wobei die genannten Befestigungsrahmen (6) in einem unteren Bereich eines mittleren Abschnitts des geformten Verstärkungskörpers (3) mit Bezug auf den endgültig montierten Zustand ausgebildet sind.

3. Armaturentafelanordnung (1) nach einem der vorhergehenden Ansprüche, wobei der genannte geformte Verstärkungskörper (3) einstückig aus Polycarbonat hergestellt ist, beispielsweise aus Polycarbonat/Acrylnitril-Butadien-Styrol ("PC + ABS").

4. Armaturentafelanordnung (1) nach einem der vorhergehenden Ansprüche, wobei jeder Befestigungsrahmen (6) eine im Wesentlichen rechteckige Form aufweist, die die genannte untere Seite (7), eine obere Seite (8) und seitliche Rahmenabschnitte (9, 10) definiert.

5. Armaturentafelanordnung (1) nach einem der vorhergehenden Ansprüche, wobei jeder Streifen zwei Befestigungsabschnitte (11, 12) umfasst, die im Wesentlichen an den Enden des Streifens beabstandet angeordnet sind.

6. Armaturentafelanordnung (1) nach einem der vorhergehenden Ansprüche, wobei der Streifen einen im Wesentlichen L-förmigen Körper aufweist, der eine Hauptseite (14) definiert, die sich in horizontaler Richtung, im Wesentlichen parallel zum Träger- und Strömungsleitkörper (5‴, 5ʺʺ), zur Innenseite der Armaturentafel (1) erstreckt, und eine zweite Seite (15), die sich mit Bezug auf den endgültig montierten Zustand in vertikaler Richtung erstreckt.

7. Armaturentafelanordnung (1) nach Anspruch 6, wobei die Abmessungen jeder unteren Seite (7) entlang der Erstreckung des Streifens variieren, wobei die genannte zweite Seite (15) im Bereich der Befestigungsabschnitte (11, 12) eine geringere Erstreckung aufweist als ein mittlerer Bereich des Streifens, in dem keine Kupplung mit den Schnappmitteln (13) vorgesehen ist.

8. Armaturentafelanordnung (1) nach Anspruch 6 oder Anspruch 7, wobei die Schnappmittel (13) der Lüftungseinheit (5) einen elastisch nachgiebigen Körper mit einem zahnartigen Abschnitt (13') umfassen, der mit der zweiten Seite (15) des Streifens in Eingriff steht.

9. Armaturentafelanordnung (1) nach Anspruch 7, wobei der Streifen in dem genannten mittleren Bereich nicht mit dem Träger- und Strömungsleitkörper (5‴, 5ʺʺ) in Kontakt steht.

10. Armaturentafelanordnung (1) nach einem der vorhergehenden Ansprüche, umfassend eine Mehrzahl von Schweißbereichen (17, 18, 19) zur Verbindung des geformten Verstärkungskörpers (3) mit dem Hauptkörper (2), wobei in jedem Schweißbereich (17, 18, 19) der Hauptkörper (2) einen hohlen Abschnitt umfasst, der zum Aufnehmen jeweiliger vorspringender Elemente (20, 21) des geformten Verstärkungskörpers (3) bemessen ist.

## Revendications

1. Ensemble de tableau de bord (1) pour un véhicule automobile, comprenant:
- un corps principal de tableau de bord (2) définissant une partie côté passager, une partie centrale et une partie côté conducteur;
- un corps de renfort profilé (3) associé audit corps principal de tableau de bord (2); et
- une unité d'aération centrale (5) configurée pour diriger un flux d'air vers l'intérieur du véhicule automobile, ladite unité d'aération centrale (5) comprenant deux aérateurs (5', 5") disposés côte à côte ainsi que des corps de support et de guidage de flux respectifs (5"', 5""),
- dans lequel ledit corps de renfort profilé (3) comprend un logement de fixation (4) réalisé dans ladite partie centrale et configuré pour recevoir et fixer ladite unité d'aération centrale (5),
- dans lequel ledit logement de fixation (4) comprend deux cadres adjacents (6) prévus pour recevoir sélectivement lesdits corps de support et de guidage de flux (5‴, 5ʺʺ), et
- dans lequel chaque cadre (6) comprend un côté inférieur de cadre (7) défini par une bande amincie, sur laquelle sont prévues des portions de fixation (11, 12) en engagement mutuel avec des moyens d'encliquetage respectifs (13) de l'aérateur correspondant (5', 5"), ledit côté inférieur (7) présentant un comportement élastique lorsque l'unité d'aération centrale (5) est montée dans les cadres de fixation (6).

2. Ensemble de tableau de bord (1) selon la revendication 1, dans lequel lesdits cadres de fixation (6) sont réalisés dans une zone inférieure d'une partie centrale du corps de renfort profilé (3), en référence à la condition finale assemblée.

3. Ensemble de tableau de bord (1) selon l'une quelconque des revendications précédentes, dans lequel ledit corps de renfort profilé (3) est réalisé en une seule pièce de polycarbonate, par exemple en polycarbonate/acrylonitrile-butadiène-styrène ("PC + ABS").

4. Ensemble de tableau de bord (1) selon l'une quelconque des revendications précédentes, dans lequel chaque cadre de fixation (6) présente une forme sensiblement rectangulaire définissant ledit côté inférieur (7), un côté supérieur (8) et des portions latérales de cadre (9, 10).

5. Ensemble de tableau de bord (1) selon l'une quelconque des revendications précédentes, dans lequel chaque bande comprend deux portions de fixation (11, 12) espacées sensiblement aux extrémités de la bande.

6. Ensemble de tableau de bord (1) selon l'une quelconque des revendications précédentes, dans lequel la bande présente un corps sensiblement en forme de L définissant un côté principal (14) s'étendant vers l'intérieur du tableau de bord (1) dans une direction horizontale sensiblement parallèle au corps de support et de guidage de flux (5‴, 5ʺʺ), et un second côté (15) s'étendant dans une direction verticale par référence à la condition finale assemblée.

7. Ensemble de tableau de bord (1) selon la revendication 6, dans lequel les dimensions de chaque côté inférieur (7) varient le long de l'étendue de la bande, ladite seconde face (15) présentant, dans la zone des portions de fixation (11, 12), une extension plus faible qu'une zone centrale de la bande où aucun couplage avec les moyens d'encliquetage (13) n'est prévu.

8. Ensemble de tableau de bord (1) selon la revendication 6 ou la revendication 7, dans lequel les moyens d'encliquetage (13) de l'unité d'aération (5) comprennent un corps élastiquement déformable avec une portion en forme de dent (13') en prise avec le second côté (15) de la bande.

9. Ensemble de tableau de bord (1) selon la revendication 7, dans lequel, dans ladite zone centrale, la bande n'est pas en contact avec le corps de support et de guidage de flux (5‴, 5ʺʺ).

10. Ensemble de tableau de bord (1) selon l'une quelconque des revendications précédentes, comprenant une pluralité de zones soudées (17, 18, 19) destinées à solidariser le corps de renfort profilé (3) au corps principal (2), dans lequel, dans chaque zone soudée (17, 18, 19), le corps principal (2) comprend une portion creuse dimensionnée pour recevoir des éléments en saillie respectifs (20, 21) du corps de renfort profilé (3).
